# EUROPÄISCHE PATENTANMELDUNG

(11) **EP 3 686 350 A1**
(43) Veröffentlichungstag der Anmeldung: **29.07.2020**
(21) Anmeldenummer: 19214297.4
(22) Anmeldetag: 06.12.2019
(51) Int. Cl.: E02F 3/20, B60K 15/03, B60K 15/06, E02F 9/08, F02M 37/00

(54) **TRÄGERGERÄT FÜR EINE SCHLITZWANDFRÄSE SOWIE TRÄGERELEMENT HIERFÜR**

(30) Priorität: 18.01.2019 DE 202019100284 U
(71) Anmelder: Liebherr-Werk Nenzing GmbH, 6710 Nenzing (AT)
(72) Erfinder: GROß, Ralf, 6710 Nenzing (AT); DIETRICH, Alex, 6774 Tschagguns (AT); GRIESEMER, Tobias, 94806 San Pablo, CA (US)
(74) Vertreter: Laufhütte, Dieter

(57) **Zusammenfassung**

Die Erfindung betrifft ein Trägergerät (10) für eine Schlitzwandfräse, umfassend ein Unterwagen, einen auf dem Unterwagen (12) drehbar gelagerten Oberwagen (14) und einen am Oberwagen angeordneten Ausleger (16), wobei der Oberwagen einen Verbrennungsmotor und einen mit dem Verbrennungsmotor verbundenen Kraftstofftank (2) umfasst, wobei ein Trägerelement, über welches eine Komponente des Trägergeräts verbunden ist, einen Hohlraum zum Lagern von Kraftstoff aufweist, welcher mit dem Kraftstofftank verbunden oder verbindbar ist.

## Beschreibung

Die vorliegende Erfindung betrifft ein Trägergerät für eine Schlitzwandfräse sowie ein Trägerelement für eine Komponente eines solchen Trägergeräts.

Trägergeräte für Schlitzwandfräsen sind aus dem Stand der Technik bekannt und üblicherweise als mobile Arbeitsmaschinen wie Fahrzeugkrane, Hydraulik- oder Seilbagger ausgeführt. Der Betrieb einer Schlitzwandfräse wird dabei von vielen Faktoren beeinflusst. Ein maßgeblicher Betriebsfaktor ist die maximale kontinuierliche Betriebsdauer der Schlitzwandfräse, welche im Wesentlichen von der Verfügbarkeit der Energieversorgung abhängt. Die Energieversorgung wird typischerweise durch einen Verbrennungsmotor mit dazugehörigem Kraftstofftank am Trägergerät sichergestellt. Hierbei steht das insgesamt fassbare Kraftstoffvolumen des Kraftstofftanks in direktem Zusammenhang mit der maximalen kontinuierlichen Betriebsdauer der Schlitzwandfräse.

Der Betrieb der Schlitzwandfräse muss daher mit dem verfügbaren Kraftstoffvolumen des primären Kraftstofftanks des Trägergeräts abgestimmt werden. Jede Unterbrechung des Fräsprozesses stellt dabei einen Zeitaufwand dar und sollte vermieden bzw. minimiert werden. Weist der Kraftstofftank einen geringen Füllstand auf, so muss dieser betankt werden, um den Fräsprozess wieder aufnehmen zu können. In dieser Zeit kann normalerweise der Fräsbetrieb nicht aufrechterhalten werden und es kommt zu einer Unterbrechung.

Eine Hauptcharakteristik derartiger Trägergeräte von Schlitzwandfräsen ist der mangelnde Platz zur Unterbringung der essentiellen Funktionen und Komponenten. Deshalb müssen notwendigerweise kompakte Bauweisen gewählt werden und auf eventuelle Wunschfunktionen verzichtet werden. Im standardmäßigen Aufbau eines Trägergeräts für eine Schlitzwandfräse, bei dem sich der Motor und der Kraftstofftank in bzw. an einem drehbar mit einem Unterwagen verbundenen Oberwagen befinden, findet sich im Bereich des Oberwagens normalerweise kein Platz für einen Zusatztank signifikanter Größe, da dort weitere Komponenten des Trägergeräts wie Auslegersysteme, Abspannvorrichtungen, Rahmenteile, Schlauchtrommelsysteme, Winden, Ballastiervorrichtungen, etc. untergebracht sind.

Der vorliegenden Erfindung liegt daher die Aufgabe zugrunde, ein Trägergerät für eine Schlitzwandfräse bereitzustellen, welches eine längere kontinuierliche Betriebsdauer der Schlitzwandfräse ermöglicht.

Erfindungsgemäß wird diese Aufgabe durch ein Trägergerät mit den Merkmalen des Anspruchs 1 gelöst. Demnach umfasst das Trägergerät einen Unterwagen, einen auf dem Unterwagen drehbar gelagerten Oberwagen und einen am Oberwagen angeordneten Ausleger, wobei der Oberwagen einen Verbrennungsmotor und einen mit dem Verbrennungsmotor verbundenen Kraftstofftank aufweist. Das Trägergerät umfasst erfindungsgemäß ein Trägerelement, über welches eine Komponente des Trägergeräts, vorzugsweise mit dem Oberwagen, verbunden ist, wobei das Trägerelement einen Hohlraum zum Lagern von Kraftstoff aufweist, welcher mit dem Kraftstofftank verbunden oder verbindbar ist.

Die vorliegende Erfindung ermöglicht die Integration eines Zusatztanks auf dem Trägergerät trotz der sehr strengen Platzbedingungen. Möglich wird dies durch das erfindungsgemäße Trägerelement, welches eine doppelte Funktion erfüllt. Neben der Hauptfunktion, welche das Tragen einer Komponente des Trägergeräts darstellt, wird ein Hohlraum im Inneren des Trägerelements erzeugt, welcher mit dem Kraftstofftank in Verbindung steht. Dieser Hohlraum wird genutzt, um den zusätzlichen Kraftstoff aufzunehmen. Somit kann eine signifikante Menge an Kraftstoff, trotz beschränkender Platzverhältnisse, gelagert und zum Betrieb der Schlitzwandfräse verwendet werden. Dadurch erhöht sich das Gesamtvolumen des tragbaren Kraftstoffs am Trägergerät signifikant, was die maximale kontinuierliche Betriebsdauer der Schlitzwandfräse erheblich verlängert.

Vorteilhafte Ausführungsformen der Erfindung ergeben sich aus den Unteransprüchen und der nachfolgenden Beschreibung.

In einer Ausführungsform ist vorgesehen, dass es sich bei der Komponente um eine Schlauchtrommel zur Lagerung eines mit der Schlitzwandfräse verbundenen Schlauchs handelt. Anstatt die Schlauchtrommel direkt an dem Trägerelement zu befestigen kann vorgesehen sein, dass dieses mit einer Rahmenstruktur bzw. Tragstruktur einer solchen Schlauchtrommel verbunden ist. Alternativ kann es sich bei der Komponente um ein anderes Bauteil des Trägergeräts wie beispielsweise eine Winde oder eine Komponente zur Abspannung handeln.

In einer weiteren Ausführungsform ist eine erste Kraftstoffpumpe vorgesehen, welche einerseits mit dem Hohlraum verbunden und andererseits mit dem Kraftstofftank verbunden oder verbindbar ist, wobei die erste Kraftstoffpumpe dazu eingerichtet ist, Kraftstoff vom Hohlraum in den Kraftstofftank zu pumpen. Das Pumpen von Kraftstoff in den Kraftstofftank kann vorzugsweise während des laufenden Betriebs des Verbrennungsmotors des Trägergeräts erfolgen, sodass der Fräsbetrieb nicht unterbrochen werden muss. Dadurch ist es möglich, bei niedrigem Kraftstofffüllstand im primären Kraftstofftank diesen mit Kraftstoff aus dem Zusatztank (Hohlraum) aufzufüllen, sodass die Schlitzwandfräse weiter betrieben werden kann.

In einer weiteren Ausführungsform ist vorgesehen, dass die erste Kraftstoffpumpe ferner eingerichtet ist, Kraftstoff vom Kraftstofftank in den Hohlraum zu pumpen. Somit kann der Hohlraum des Trägerelements indirekt über den Kraftstofftank mit Kraftstoff befüllt werden, ohne dass ein Bediener direkt, z.B. mit einer Betankungspistole, das Trägerelement erreichen muss. Dadurch erhöht sich die Flexibilität bei der Anordnung und Ausgestaltung des Trägerelements, da dieses an einer Stelle platziert werden kann, die nicht oder nur schwierig zugänglich ist.

Vorzugsweise weist der Kraftstofftank eine zweite verschließbare Öffnung auf, über welche dieser (beispielsweise mittels einer Betankungspistole) mit Kraftstoff befüllbar ist. Falls die erste Kraftstoffpumpe eingerichtet ist, Kraftstoff vom Kraftstofftank in den Hohlraum zu pumpen, kann der Bediener bequem Kraftstoff über die zweite Öffnung in den Kraftstofftank einfüllen und den als Zusatztank fungierenden Hohlraum über die erste Kraftstoffpumpe befüllen.

In einer weiteren Ausführungsform ist vorgesehen, dass die erste Kraftstoffpumpe und der Kraftstofftank über eine erste Kraftstoffleitung verbunden oder verbindbar sind, die einen Anschluss, aufweist, mittels welcher die Verbindung zwischen erster Kraftstoffpumpe und Kraftstofftank trennbar und wiederherstellbar ist. Der Anschluss ist vorzugsweise als Schnellkupplung ausgestaltet, sodass ein Herstellen oder Trennen der Verbindung schnell und einfach möglich ist. Der Anschluss stellt die Trennstelle des Betankungssystems zwischen Trägerelement und Kraftstofftank dar.

In einer weiteren Ausführungsform ist vorgesehen, dass der Kraftstofftank und/oder der Hohlraum eine Füllstanderfassungsvorrichtung umfasst, mittels welcher ein Pumpen von Kraftstoff in den Kraftstofftank mittels der ersten Kraftstoffpumpe bei Erreichen eines definierten Kraftstofffüllstandes in dem Kraftstofftank oder dem Hohlraum beendbar ist. Dadurch wird der Betankungsvorgang des Kraftstofftanks über den Hohlraum erleichtert. Beispielsweise kann die Füllstanderfassungsvorrichtung einen Niveaugeber oder eine Niveausonde umfassen.

In einer weiteren Ausführungsform ist eine zweite Kraftstoffpumpe vorgesehen, welche mit dem Hohlraum und mit dem Kraftstofftank verbunden oder verbindbar ist und dazu eingerichtet ist, Kraftstoff in den Hohlraum und den Kraftstofftank zu pumpen. Dadurch kann der Kraftstofftank und/oder der Hohlraum anstelle oder alternativ zu einer manuellen Betankung mittels einer Betankungspistole über die zweite Kraftstoffpumpe betankt werden. Um eine selektive Betankung des Hohlraums und des Kraftstofftanks vornehmen zu können, kann die zweite Kraftstoffpumpe ferner entsprechende Einstellelemente wie z.B. Kugelhähne aufweisen.

Der Betankungsvorgang des Hohlraums und/oder des Kraftstofftanks mittels der zweiten Kraftstoffpumpe wird vorzugsweise mit Hilfe entsprechender Füllstanderfassungsvorrichtungen im Hohlraum und/oder Kraftstofftank automatisch bei Erreichen eines definierten Kraftstoffniveaus beendet.

In einer weiteren Ausführungsform ist vorgesehen, dass die zweite Kraftstoffpumpe und der Hohlraum über eine zweite Kraftstoffleitung verbunden oder verbindbar sind, die einen Anschluss, insbesondere eine Schnellkupplung, aufweist, mittels welcher die Verbindung zwischen zweiter Kraftstoffpumpe und Hohlraum trennbar und wiederherstellbar ist. Der Anschluss kann mit dem Anschluss der Kraftstoffleitung zwischen Hohlraum und Kraftstofftank kombiniert bzw. verbunden sein, um eine gemeinsame Trennstelle zu bilden und das Betankungssystem zu vereinfachen.

In einer weiteren Ausführungsform ist vorgesehen, dass das Trägerelement eine erste verschließbare Öffnung umfasst, über welche der Hohlraum mit Kraftstoff befüllbar ist. Dadurch kann der Hohlraum jederzeit direkt, beispielsweise mittels einer Betankungspistole, mit Kraftstoff befüllt werden. Dies kann unabhängig vom Betrieb des Verbrennungsmotors erfolgen, sodass die Schlitzwandfräse während des Betankens weiter betrieben werden kann.

In einer weiteren Ausführungsform ist vorgesehen, dass das Trägerelement eine Rahmenstruktur umfasst, welche aus Stahl besteht und in deren Innenraum der Hohlraum ausgebildet ist. Dadurch weist das Trägerelement die nötige Stabilität zum Erfüllen von dessen primärer Funktion - dem Tragen der Komponente des Trägergeräts - auf, während der Innenraum den Hohlraum zur platzsparenden Lagerung des zusätzlichen Kraftstoffs bildet.

In einer weiteren Ausführungsform ist vorgesehen, dass eine Anzeigeeinheit vorgesehen ist, mittels welcher der Kraftstofffüllstand des Kraftstofftanks und/oder des Hohlraums darstellbar ist. Dadurch kann ein Bediener den Betankungsvorgang einfach überwachen und steuern.

Des Weiteren betrifft die vorliegende Erfindung ein Trägerelement für eine Komponente eines erfindungsgemäßen Trägergeräts. Das Trägerelement weist ein erstes Verbindungselement zur Befestigung der Komponente, beispielsweise einer Schlauchtrommel, an dem Trägerelement und ein zweites Verbindungselement zur Befestigung des Trägerelements an dem Trägergerät, vorzugsweise an dessen Oberwagen, auf. Ferner weist das Trägerelement einen Hohlraum zum Lagern von Kraftstoff auf, welcher mit dem Kraftstofftank des Trägergeräts verbunden oder verbindbar ist.

Dabei ergeben sich offensichtlich dieselben Vorteile und Eigenschaften wie für das erfindungsgemäße Trägergerät, weshalb an dieser Stelle auf eine wiederholende Beschreibung verzichtet wird.

Vorzugsweise umfasst das Trägerelement eine Füllstanderfassungsvorrichtung, beispielswiese einen Niveaugeber oder eine Niveausonde, um einen Betankungs- oder einen Entleerungsvorgang zum Befüllen des Kraftstofftanks automatisch bei Erreichen eines bestimmten Kraftstoffniveaus beenden zu können. Ferner ist vorteilhafterweise eine verschließbare Öffnung zum direkten Befüllen des Hohlraums mit Kraftstoff vorgesehen.

Weitere Merkmale, Einzelheiten und Vorteile der Erfindung ergeben sich aus dem nachfolgend anhand der Figuren erläuterten Ausführungsbeispielen. Es zeigen:
- Figur 1:: ein Ausführungsbeispiel des erfindungsgemäßen Trägergeräts in einer Seitenansicht; und
- Figur 2:: ein Ausführungsbeispiel des erfindungsgemäßen Trägerelements mit Betankungssystem in einer perspektivischen Ansicht.

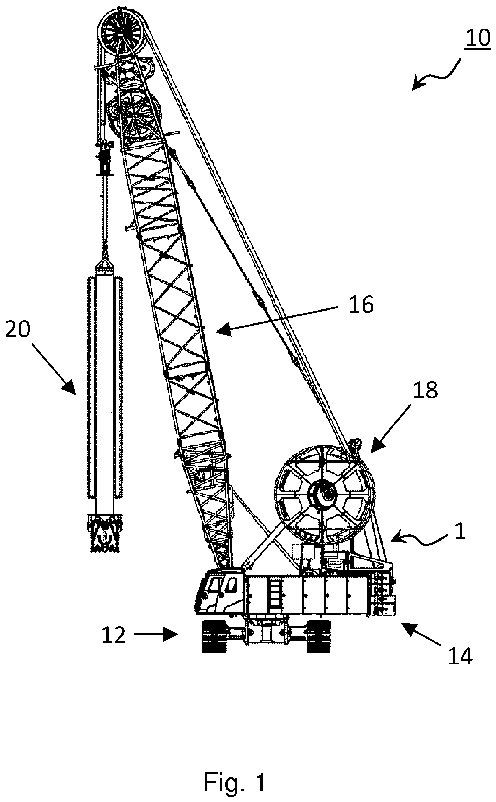

In der Figur 1 ist ein Ausführungsbeispiel des erfindungsgemäßen Trägergeräts 10 in einer Seitenansicht dargestellt. Hierbei handelt es sich um einen Seilbagger mit drehbar auf einem Unterwagen 12 gelagerten Oberwagen 14, wobei der Unterwagen 12 ein Raupenfahrwerk aufweist. Selbstverständlich können auch andere Arten von Arbeitsmaschinen wie Hydraulikbagger oder Fahrzeugkrane zum Einsatz kommen.

An den Oberwagen 14 ist ein Ausleger 16 um eine horizontale Achse schwenkbar angelenkt. Eine Schlitzwandfräse 20 ist an einem Zugseil befestigt, welches über eine Rolle an der Auslegerspitze geführt ist. Die Schlitzwandfräse 20 weist mindestens einen Schlauch auf, welcher ebenfalls über eine Rolle an der Auslegerspitze geführt und auf einer Schlauchtrommel 18 gelagert ist, welche an der Oberseite des Oberwagens 14 angeordnet und über ein Trägerelement 1 mit diesem verbunden bzw. gelagert ist. Beim vertikalen Verschieben der Schlitzwandfräse 20 wird der Schlauch entsprechend von der Schlauchtrommel 18 ab- oder aufgewickelt.

Der Oberwagen 14 umfasst ferner einen Verbrennungsmotor (nicht gezeigt) und einen Kraftstofftank 2, welcher den Verbrennungsmotor mit Kraftstoff versorgt. Der Verbrennungsmotor des Trägergeräts 10 stellt dabei die Energieversorgung der Schlitzwandfräse 20 sicher.

Auf der Oberseite des Oberwagens 14 befindet sich eine Vielzahl von Bauteilen, welche für unterschiedliche Funktionen des Trägergeräts 10 oder der Schlitzwandfräse 20 zuständig sind. Dadurch ergeben sich sehr begrenzte Platzverhältnisse am Oberwagen 14, welche das Anbringen zusätzlicher Bauteile wie z.B. Zusatztanks mit signifikanter Größe verhindern.

Um die Schaffung eines Zusatztanks mit signifikantem Volumen für die Lagerung von zusätzlichen Kraftstoff zu ermöglichen, ist erfindungsgemäß vorgesehen, dass das Trägerelement 1, über welches die Schlauchtrommel 18 mit dem Oberwagen 14 verbunden ist, einen Hohlraum aufweist, in welchem zusätzlicher Kraftstoff gelagert werden kann. Der Hohlraum fungiert somit als Zusatztank zur Vergrößerung der insgesamt verfügbaren Kraftstoffmenge für den Verbrennungsmotor.

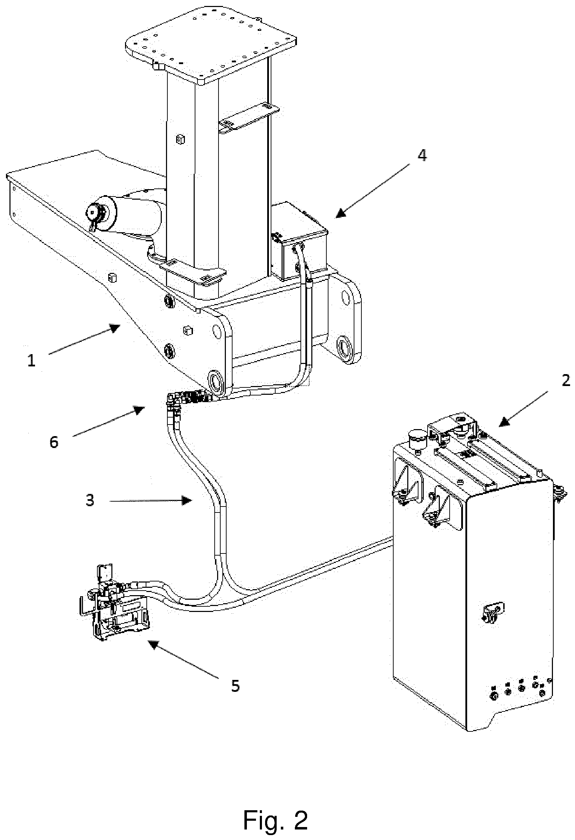

Die Figur 2 zeigt eine perspektivische Darstellung eines Ausführungsbeispiels des Trägerelements 1 (hier ohne Trägergerät 10 und Schlauchtrommel 18 gezeigt) und des Kraftstofftanks 2, welche über mehrere Kraftstoffleitungen 3 miteinander verbunden sind. Das Trägerelement 1 umfasst einen Stahlrahmen mit Anschlüssen zur Befestigung an dem Oberwagen 14 und zur Montage der Schlauchtrommel 18 bzw. einer die Schlauchtrommel 18 tragenden Rahmenstruktur.

Der als Zusatztank fungierende Hohlraum wird durch den Innenraum des Trägerelements 1 gebildet. Der Hohlraum steht mit dem Kraftstofftank 2 über eine erste Kraftstoffpumpe 4 und eine Kraftstoffleitung 3 in Verbindung. Mittels der ersten Kraftstoffpumpe 4 lässt sich Kraftstoff vom Hohlraum in den Kraftstofftank 2 pumpen, beispielsweise um den Kraftstofftank 2 bei niedrigem Füllstand wieder aufzufüllen und den weiteren Betrieb des Verbrennungsmotors bzw. der Schlitzwandfräse 20 sicherzustellen. Die Abschaltung der ersten Kraftstoffpumpe 4 bzw. die Beendigung des Befüllvorgangs des Kraftstofftanks 2 kann entweder über eine Niveausonde im Hohlraum bei Erreichen eines minimalen Füllstands oder einen Niveaugeber im Kraftstofftank 2 bei Erreichen eines maximalen Füllstands oder beides erfolgen.

Zum einfachen Betanken beider Tanks, d.h. des Hohlraums und des Kraftstofftanks 2, ist eine zweite Kraftstoffpumpe 5 vorgesehen, welche mit beiden Tanks über entsprechende Kraftstoffleitungen 3 in Verbindung steht und zum Pumpen von Kraftstoff in den Hohlraum und des Kraftstofftank 2 eingesetzt werden kann. Die Steuerung der zweiten Kraftstoffpumpe 5 erfolgt über einen oder mehrere Kugelhähne. Eine Abschaltung erfolgt über Niveaugeber in den zu befüllenden Tanks (Hohlraum / Kraftstofftank 2).

Kraftstoffleitungen 3 verlaufen zwischen Hohlraum und Kraftstofftank 2, zwischen Hohlraum und zweiter Kraftstoffpumpe 5 sowie zwischen Letzterer und dem Kraftstofftank 2. Die mit der ersten Kraftstoffpumpe 4 verbundenen Kraftstoffleitungen 3 weisen Schnellkupplungen 6 auf, welche die Trennstelle des Kraftstoffsystems darstellen. Dadurch kann das Trägerelement 1 mitsamt der ersten Kraftstoffpumpe 4 von dem Kraftstofftank 2 und der zweiten Kraftstoffpumpe 5 schnell und einfach getrennt und wieder verbunden werden.

Sowohl der Kraftstofftank 2 als auch das Trägerelement 1 weisen verschließbare Öffnungen auf, über welche der Hohlraum bzw. der Kraftstofftank 2 direkt mittels Betankungspistole mit Kraftstoff befüllt werden können.

Darüber hinaus kann die erste Kraftstoffpumpe 4 dazu eingerichtet sein, Kraftstoff vom Kraftstofftank 2 in den Hohlraum zu pumpen. Dadurch kann der Hohlraum indirekt über den Kraftstofftank 2 aufgefüllt werden, während der Kraftstofftank 2 z.B. per Betankungspistole betankt wird. Somit muss das Trägerelement 1 für einen Betankungsvorgang nicht direkt oder einfach zugänglich sein, was insbesondere dann sinnvoll ist, wenn keine zweite Kraftstoffpumpe 5 vorgesehen ist.

Die Füllstände des Hohlraums und des Kraftstofftanks 2 werden dem Bediener über eine Anzeigeeinheit dargestellt, sodass dieser die Füllstände überprüfen und den Betankungsvorgang steuern kann.

Dieses erfindungsgemäße Konzept der Betankungsfunktionen ermöglicht einen (prinzipiell zeitlich unbegrenzten) Dauerbetrieb der Schlitzwandfräse 20. So ist es möglich, eine Betankung vom als Zusatztank fungierenden Hohlraum in den Kraftstofftank 2 über die erste Kraftstoffpumpe 4 durchzuführen, wenn der Füllstand des Kraftstofftanks 2 niedrig ist. Nach dem Pumpvorgang kann der Hohlraum wieder aufgefüllt werden, beispielsweise mit einer Betankungspistole, ohne dass der Betrieb der Schlitzwandfräse 20 unterbrochen werden muss. Dieser Vorgang kann beliebig oft wiederholt werden, bis der Fräsbetrieb mittels der Schlitzwandfräse 20 beendet ist.

Durch die Erfindung werden folgende Vorteile beim Schlitzwandfräsenbetrieb erzielt:
- Kompakte Integration eines Zusatztanks durch geschickte Implementierung eines Hohlraums in ein für eine vorhandene Komponente des Trägergeräts vorgesehenes Trägerelement 1 (Doppelfunktion);
- Erhöhung des gesamten Kraftstoffvolumens am Trägergerät und Maximierung der kontinuierlichen Betriebsdauer der Schlitzwandfräse 20 (Dauerbetrieb möglich);
- Ausschluss von frühzeitigen Unterbrechungen des Fräsenbetriebs aufgrund von Kraftstoffmangel;
- Verringerung der insgesamt notwendigen Anzahl von Tankvorgängen;
- Erhöhte Verfügbarkeit der Schlitzwandfräse 20.

### Bezugszeichenliste:

- 1: Trägerelement
- 2: Kraftstofftank
- 3: Kraftstoffleitung
- 4: Erste Kraftstoffpumpe
- 5: Zweite Kraftstoffpumpe
- 6: Anschluss
- 10: Trägergerät
- 12: Unterwagen
- 14: Oberwagen
- 16: Ausleger
- 18: Schlauchrolle
- 20: Schlitzwandfräse

## Patentansprüche

1. Trägergerät (10) für eine Schlitzwandfräse (20), umfassend einen Unterwagen (12), einen auf dem Unterwagen (12) drehbar gelagerten Oberwagen (14) und einen am Oberwagen (14) angeordneten Ausleger (16), wobei der Oberwagen (14) einen Verbrennungsmotor und einen mit dem Verbrennungsmotor verbundenen Kraftstofftank (2) umfasst,
**gekennzeichnet durch**
ein Trägerelement (1), über welches eine Komponente (18) des Trägergeräts (10), vorzugsweise mit dem Oberwagen (14), verbunden ist, wobei das Trägerelement (1) einen Hohlraum zum Lagern von Kraftstoff aufweist, welcher mit dem Kraftstofftank (2) verbunden oder verbindbar ist.

2. Trägergerät (10) nach Anspruch 1, **dadurch gekennzeichnet, dass** es sich bei der Komponente (18) um eine Schlauchtrommel zur Lagerung eines mit der Schlitzwandfräse (20) verbundenen Schlauchs, oder eine Winde handelt.

3. Trägergerät (10) nach Anspruch 1 oder 2, **dadurch gekennzeichnet, dass** eine erste Kraftstoffpumpe (4) vorgesehen ist, welche einerseits mit dem Hohlraum verbunden und andererseits mit dem Kraftstofftank (2) verbunden oder verbindbar ist, wobei die erste Kraftstoffpumpe (4) dazu eingerichtet ist, Kraftstoff vom Hohlraum in den Kraftstofftank (2) zu pumpen, vorzugsweise während des laufenden Betriebs des Verbrennungsmotors.

4. Trägergerät (10) nach Anspruch 3, **dadurch gekennzeichnet, dass** die erste Kraftstoffpumpe (4) ferner eingerichtet ist, Kraftstoff vom Kraftstofftank (2) in den Hohlraum zu pumpen.

5. Trägergerät (10) nach Anspruch 3 oder 4, **dadurch gekennzeichnet, dass** die erste Kraftstoffpumpe (4) und der Kraftstofftank (2) über eine erste Kraftstoffleitung (3) verbunden oder verbindbar sind, die einen Anschluss (6), insbesondere eine Schnellkupplung, aufweist, mittels welcher die Verbindung zwischen erster Kraftstoffpumpe (4) und Kraftstofftank (2) trennbar und wiederherstellbar ist.

6. Trägergerät (10) nach einem der Ansprüche 3 bis 5, **dadurch gekennzeichnet, dass** der Kraftstofftank (2) und/oder der Hohlraum eine Füllstanderfassungsvorrichtung umfasst, mittels welcher ein Pumpen von Kraftstoff in den Kraftstofftank (2) mittels der ersten Kraftstoffpumpe (4) bei Erreichen eines definierten Kraftstofffüllstandes in dem Kraftstofftank (2) oder dem Hohlraum beendbar ist.

7. Trägergerät (10) nach einem der vorhergehenden Ansprüche, **dadurch gekennzeichnet, dass** eine zweite Kraftstoffpumpe (5) vorgesehen ist, welche mit dem Hohlraum und mit dem Kraftstofftank (2) verbunden oder verbindbar ist und dazu eingerichtet ist, Kraftstoff in den Hohlraum und den Kraftstofftank (2) zu pumpen.

8. Trägergerät (10) nach Anspruch 7, **dadurch gekennzeichnet, dass** die zweite Kraftstoffpumpe (5) und der Hohlraum über eine zweite Kraftstoffleitung (3) verbunden oder verbindbar sind, die einen Anschluss (6), insbesondere eine Schnellkupplung, aufweist, mittels welcher die Verbindung zwischen zweiter Kraftstoffpumpe (5) und Hohlraum trennbar und wiederherstellbar ist.

9. Trägergerät (10) nach einem der vorhergehenden Ansprüche, **dadurch gekennzeichnet, dass** das Trägerelement (1) eine erste verschließbare Öffnung umfasst, über welche der Hohlraum mit Kraftstoff befüllbar ist.

10. Trägergerät (10) nach einem der vorhergehenden Ansprüche, **dadurch gekennzeichnet, dass** eine zweite verschließbare Öffnung vorgesehen ist, über welche der Kraftstofftank (2) mit Kraftstoff befüllbar ist.

11. Trägergerät (10) nach einem der vorhergehenden Ansprüche, **dadurch gekennzeichnet, dass** das Trägerelement (1) eine Rahmenstruktur umfasst, welche aus Stahl besteht und in deren Innenraum der Hohlraum ausgebildet ist.

12. Trägergerät (10) nach einem der vorhergehenden Ansprüche, **dadurch gekennzeichnet, dass** eine Anzeigeeinheit vorgesehen ist, mittels welcher der Kraftstofffüllstand des Kraftstofftanks (2) und/oder des Hohlraums darstellbar ist.

13. Trägerelement (1) für eine Komponente (18) eines Trägergeräts (10) nach einem der vorhergehenden Ansprüche, mit einem ersten Verbindungselement zur Befestigung der Komponente (18) an dem Trägerelement (1) und einem zweiten Verbindungselement zur Befestigung des Trägerelements (1) an dem Trägergerät (10), vorzugsweise an dessen Oberwagen (14), wobei das Trägerelement (1) einen Hohlraum zum Lagern von Kraftstoff aufweist, welcher mit dem Kraftstofftank (2) des Trägergeräts (10) verbunden oder verbindbar ist.
